# EUROPÄISCHE PATENTSCHRIFT

(11) **EP 2 614 119 B1**
(45) Veröffentlichungstag und Bekanntmachung des Hinweises auf die Patenterteilung: **18.10.2017**
(21) Anmeldenummer: 11748322.2
(22) Anmeldetag: 27.07.2011
(51) Int. Cl.: C08J 3/24, C09D 5/26

(54) **FUNKTIONSMATERIALIEN MIT STEUERBARER VISKOSITÄT BZW. REVERSIBLER VERNETZUNG ÜBER AZA-DIELS-ALDER-REAKTIONEN MIT BISHYDRAZONEN ODER KONJUGIERTEN BIS-SCHIFF'SCHEN BASEN**
FUNCTIONAL MATERIALS HAVING A CONTROLLABLE VISCOSITY OR REVERSIBLE CROSSLINKING VIA AZA DIELS-ALDER REACTIONS WITH BISHYDRAZONES OR CONJUGATED BIS-SCHIFF BASES
MATÉRIAUX FONCTIONNELS À VISCOSITÉ RÉGULABLE ET À RÉTICULATION RÉVERSIBLE PAR DES RÉACTIONS D'AZA-DIELS-ALDER AVEC DES BIS-HYDRAZONES OU DES BASES DE SCHIFF BIS CONJUGUÉES

(30) Priorität: 06.09.2010 DE 102010040282
(43) Veröffentlichungstag der Anmeldung: 17.07.2013
(73) Patentinhaber: Evonik Röhm GmbH, 64293 Darmstadt (DE); Karlsruher Institut für Technologie, 76131 Karlsruhe (DE)
(72) Erfinder: SCHMIDT, Friedrich, Georg, 45721 Haltern am See (DE); HILF, Stefan, 63517 Rodenbach (DE); BARNER-KOWOLLIK, Christopher, 76297 Stutensee (DE); ZHOU, Jiawen, 47443 Moers (DE)
(86) Internationale Anmeldenummer: PCT/EP2011/062857
(87) Internationale Veröffentlichungsnummer: WO 2012/031824

(56) Entgegenhaltungen:
- DE-A1- 19 902 484
- JAY A. SYRETT ET AL: "Self-healing and self-mendable polymers", POLYMER CHEMISTRY, Bd. 1, Nr. 7, 1. Januar 2010 (2010-01-01), Seite 978, XP55018764, ISSN: 1759-9954, DOI: 10.1039/c0py00104j
- SEBASTIAN SINNWELL ET AL: "Efficient access to multi-arm star block copolymers by a combination of ATRP and RAFT-HDA click chemistry", JOURNAL OF POLYMER SCIENCE PART A: POLYMER CHEMISTRY, Bd. 47, Nr. 8, 15. April 2009 (2009-04-15) , Seiten 2207-2213, XP55018768, ISSN: 0887-624X, DOI: 10.1002/pola.23299 in der Anmeldung erwähnt
- ANDREW J. INGLIS ET AL: "Ultrafast Click Conjugation of Macromolecular Building Blocks at Ambient Temperature", ANGEWANDTE CHEMIE INTERNATIONAL EDITION, 17. Februar 2009 (2009-02-17), Seiten NA-NA, XP55018786, ISSN: 1433-7851, DOI: 10.1002/anie.200805993 in der Anmeldung erwähnt

## Beschreibung

Die vorliegende Erfindung betrifft neuartige Materialien, die mittels eines thermoreversiblen Mechanismus reversibel vernetzbar sind bzw. deren Viskosität reversibel einstellbar ist.

Durch die Verwendung von Bishydrazonen oder konjugierten Bis-Schiff' schen Basen als Dien-Komponenten in Aza-Diels-Alder-Reaktionen werden Funktionsmaterialien mit steuerbarer Viskosität bzw. reversibler Vernetzung erzeugt.

### Stand der Technik

Methoden zur reversiblen Vernetzung von Polymeren sind für ein breites Feld von Anwendungen von großem Interesse.

Beispielsweise in Klebanwendungen sind diverse Möglichkeiten für die Automobilindustrie oder die Halbleiterindustrie beschrieben. Aber auch bei der Konstruktion von Maschinen, feinmechanischen Geräten oder in der Bauindustrie sind solche Klebstoffe interessant. Neben Klebanwendungen können reversibel vernetzbare Polymere auch in Dichtstoffen, Beschichtungsmassen wie Lacken oder Farben oder bei der Herstellung von Formkörpern interessant sein.

In DE 198 32 629 und in DE 199 61 940 sind Verfahren beschrieben, bei dem Klebstoffe auf Epoxy-, Harnstoff-, (Meth)acrylat- oder Isocyanatbasis thermisch zersetzt werden. Die Klebstoffformulierung aus DE 199 61 940 enthält dazu eine thermisch instabile Substanz, die bei Erhitzen aktiviert wird. Die Klebschicht in DE 198 32 629 wird durch besonders hohen Energieeintrag zerstört. Die Desaktivierung der Klebschicht ist in beiden Fällen irreversibel.

In US 2005/0159521 bzw. in US 2009/0090461 ist ein Klebsystem beschrieben, das durch Bestrahlung mit aktinischer Strahlung radikalisch vernetzt und durch Ultraschall zerstört wird. Auch dieses Verfahren ist nach einem Klebezyklus irreversibel nicht mehr durchführbar.

In EP 2 062 926 sind in die Ketten eines Polyurethans für Klebanwendungen thermisch labile, sterisch gehinderte Harnstoffgruppen eingebaut, die durch Eintrag thermischer Energie zerstört wird und damit die Klebwirkung ausreichend zur Lösung der Verbindung reduziert wird.

In US 2009/0280330 ist ein wahrscheinlich mehrfach verwendbares Klebsystem beschrieben, das einen Zweischichtaufbau aufweist. Bei einer Schicht handelt es sich um eine Shape-Memory-Schicht, die thermisch flexibel oder gehärtet werden kann. Bei der anderen Schicht handelt es sich um einen Trockenkleber, der unterschiedliche Klebstärken in Abhängigkeit von der Struktur aufweist. Problem eines solchen Systems ist jedoch die aufwendig aufzubauende zweischichtige Struktur und die zu erwartende Restklebrigkeit nach Erhitzen der Shape-Memory-Schicht.

Unter dem Oberbegriff "Click Chemie" werden seit einigen Jahren vor allem in der akademischen Welt Methoden zum Aufbau von Blockcopolymeren erforscht. Dabei werden zwei unterschiedliche Homopolymere mit verknüpfbaren Endgruppen miteinander kombiniert und z.B. mittels einer Diels-Alder-Reaktion, Diels-Alder-analogen Reaktion bzw. einer anderen Cycloaddition miteinander verbunden. Ziel dieser Reaktion ist es, thermisch stabile, lineare und ggf. hochmolekulare Polymerketten aufzubauen. In Inglis et al. (Macromolecules 2010, 43, S.33-36) beispielsweise sind zu diesem Zweck Polymere mit Cyclopentadienylendgruppen, die aus mittels ATRP hergestellten Polymeren erhältlich sind, beschrieben. Diese Cyclopentadiengruppen können sehr rasch in Hetero-Diels-Alder Reaktionen mit Polymeren reagieren, welche elektronenarme Dithioester als Endgruppen tragen (Inglis et al. Angew. Chem. Int. Ed. 2009, 48, S. 2411-2414).

Die Verwendung von monofunktionellen RAFT-Polymeren zur Verknüpfung mit monofunktionellen Polymeren, die eine Dihydrothiopyran-Gruppe über eine Hetero-Diels-Alder-Reaktion findet sich in Sinnwell et al. (Chem. Comm. 2008, 2052-2054). Mit dieser Methode lassen sich AB-Diblockcopolymere realisieren. Schnelle Varianten dieser Hetero-Diels-Alder-Verknüpfung zur Synthese von AB-Blockcopolymeren mit einer nach einer RAFT-Polymerisation vorliegenden Dithioester-Gruppe und einer Dienyl-Endgruppe sind in Inglis et al. (Angew.Chem.Int.Ed. 2009, 48, S.2411-14) und in Inglis et al. (Macromol. Rapd Commun. 2009, 30, S.1792-98) beschrieben. Die analoge Herstellung von Multiarm-Sternpolymeren findet sich in Sinnwell et al. (J.Pol.Sci.: Part A: Pol.Chem. 2009, 47, S.2207-13).

In US 6,933,361 ist ein System zur Herstellung von einfach reparierbaren, transparenten Formkörpern beschrieben. Das System besteht aus zwei multifunktionellen Monomeren, die mittels einer Diels-Alder-Reaktion zu einem hochdichten Netzwerk polymerisieren. Dabei handelt es sich bei der einen Funktionalität um ein Maleinsäureimid und bei der anderen Funktionalität um ein Furan. Das thermische Schalten eines solchen hochdichten Netzwerks dient zur Reparatur desselbigen. Die Vernetzung findet bei Temperaturen oberhalb von 100 °C statt. Die partielle Rückreaktion bei noch höheren Temperaturen.

Bei Syrett et al. (Polym.Chem. 2010, DOI: 10.1039/b9py00316a) werden Sternpolymere zur Verwendung als Fließverbesserer in Ölen beschrieben. Diese weisen mittels einer reversiblen Diels-Alder-Reaktion steuerbare, selbstheilende Eigenschaften auf. Dazu werden monofunktionelle Polymethacrylatarme mit Polymethacrylaten kombiniert, die in der Mitte der Kette, als Fragment des eingesetzten Initiators über eine in einer reversiblen Diels-Alder-Reaktion verwendbare Gruppe verfügen.

In der am 16.02.2010 beim Deutschen Patent- und Markenamt hinterlegten Patentanmeldung mit der Nummer 102010001987.9 sind vernetzbare Systeme offenbart, die einen thermoreversiblen Vernetzungsmechanismus auf Basis einer Diels-Alder- oder einer Hetero-Diels-Alder-Reaktion aufweisen. In der am gleichen Tag hinterlegten deutschen Patentanmeldung 102010001992.5 sind analoge Systeme offenbart, die mittels des gleichen thermoreversiblen Mechanismus eine steuerbare Viskosität aufweisen. Dabei sind beide Patentanmeldungen überwiegend auf Systeme eingeschränkt, bei denen das Dienophil eine Kohlenstoff-Schwefel Doppelbindung aufweist. Zudem sind in beiden Fällen nur Systeme beschrieben, die zumindest eine polymere Komponente enthalten, die auf einer kontrollierten radikalischen Polymerisation beruht.

Eine Elastomer-Zusammensetzung umfassend ein Elastomer mit einer funktionellen Gruppe und eine Verbindung mit einer weiteren funktionellen Gruppe, wobei die Vernetzung der funktionellen Gruppen in Abhängigkeit der Temperatur reversibel gebildet bzw. gespalten wird, ist aus der EP 199 02 484 A1 bekannt. Als Vernetzungsreaktion wird eine Diels-Alder-Reaktion vorgeschlagen.

### Aufgabe

Aufgabe der vorliegenden Erfindung ist die Bereitstellung einer neuen reversiblen, insbesondere thermoreversiblen Kupplungs- bzw. Vernetzungsmethode, die in unterschiedlichen Anwendungen und in einem breiten Formulierungsspektrum einsetzbar ist.

Darüber hinaus bestand die Aufgabe, eine reversible Kupplungs- bzw. Vernetzungsmethode zur Verfügung zu stellen, die für ein breites Spektrum an Bindemitteln verwendbar ist.

Insbesondere besteht die Aufgabe, eine reversible Vernetzungsmethode zur Verfügung zu stellen, die mehrfach, d.h. mindestens fünfmal ohne großen Eigenschaftsverlust schaltbar ist.

Darüber hinaus besteht die Aufgabe, eine reversible Vernetzungsmethode zur Verfügung zu stellen, die bei geringen Temperaturen sehr schnell aktivierbar ist und unter Bedingungen, die unschädlich für die Formulierung und eventuell beschichtete Substrate sind, wieder deaktivierbar ist.

Weitere nicht explizit genannte Aufgaben ergeben sich aus dem Gesamtzusammenhang der nachfolgenden Beschreibung, Ansprüche und Beispiele.

### Lösung

Gelöst wurden die Aufgaben durch Entwicklung eines neuartigen reversiblen Vernetzungsmechanismus, der unabhängig von den Formulierungsbestandteilen wie Bindemittel für verschiedenartige Polymere einsetzbar ist. Mit dem Mechanismus werden auch neue reversibel vernetzbare Formulierungen zur Verfügung gestellt. Überraschend wurde gefunden, dass die gestellten Aufgaben durch eine Formulierung, die mittels einer Aza-Diels-Alder-Reaktion vernetzbar ist, gelöst werden können.

Insbesondere wurden die Aufgaben durch die Bereitstellung einer neuartigen Formulierung, die eine Komponente A enthält, die mindestens zwei dienophile Doppelbindungen aufweist, und eine Komponente B enthält, die mindestens zwei Dien-Funktionalitäten aufweist, gelöst. Dabei weist Komponente B mindestens zwei Dien-Funktionalitäten auf, wobei es sich bei den Dien-Funktionalitäten um Bishydrazone oder um Bis-Schiff' sche Basen handelt.

Diese neuartige erfinderische Formulierung ist bei Raumtemperatur kuppel- oder vernetzbar. Gleichzeitig ist die Kupplung bzw. Vernetzung bei einer höheren Temperatur zu mindestens 50% wieder rückgängig zu machen.

Unter Kupplung wird erfindungsgemäß ein Mechanismus verstanden, mit dem die Viskosität einer Formulierung reversibel schaltbar ist. Das erfindungsgemäße Schalten erfolgt durch die Reaktion von zwei jeweils bifunktionellen Polymeren und/oder Oligomeren und/oder niedermolekularen Verbindungen zu höhermolekularen Polymerketten unter einer ersten Bedingung, wie zum Beispiel einer ersten, niedrigeren Temperatur. Zum erfindungsgemäßen Schalten gehört darüber hinaus die Lösung dieser Reaktionsstellen unter einer zweiten Bedingung, wie zum Beispiel einer zweiten, höheren Temperatur.

Unter Vernetzung wird erfindungsgemäß ein Mechanismus verstanden, mit dem eine Formulierung reversibel vernetzbar ist. Die erfindungsgemäße Vernetzung erfolgt durch die Reaktion von zwei jeweils mindestens bifunktionellen Polymeren und/oder Oligomeren und/oder niedermolekularen Verbindungen zu einem vernetzten Polymer unter einer ersten Bedingung, wie zum Beispiel einer ersten, niedrigeren Temperatur. Zum erfindungsgemäßen Schalten gehört darüber hinaus die Lösung dieser Kupplungsstellen unter einer zweiten Bedingung, wie zum Beispiel einer zweiten, höheren Temperatur. Bei einer Formulierung zur reversiblen Vernetzung weist zumindest eine dieser beiden Komponenten A oder B mehr als zwei Funktionalitäten auf.

In einer bevorzugten Ausführungsform liegt mindestens eine der Komponenten A oder B als Polymer vor. Ein Vorteil der vorliegenden Erfindung ist, dass diese Polymere frei wählbar sind. Bei den Polymeren handelt es sich bevorzugt um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere. Besonders bevorzugt handelt es sich bei dem Polymer um ein Poly(meth)acrylat oder ein Polystyrol.

In einer besonderen Ausführungsform wurden diese besonders bevorzugten Polymere mittels einer kontrollierten radikalischen Polymerisation hergestellt. Dabei handelt es sich insbesondere um ein Polymerisationsverfahren nach der Atom Transfer Radical Polymerization (ATRP), Nitroxide Mediated Polymerization (NMP) oder Reversible Addition Fragmentation Chain Transfer Polymerization (RAFT) Methode.

Beispielsweise für die Ausführungsform, dass es sich bei Komponente B um ein mittels ATRP hergstelltes, bifunktionelles Polymer handelt, kann die Funktionalisierung mit Diengruppen durch eine polymeranaloge Reaktion oder eine während des Abbruchs durchgeführte Substitution endständiger Halogenatome erfolgen. Diese Substitution kann beispielsweise durch Zugabe von mit Diengruppen funktionalisierten Mercaptanen erreicht werden.

Die im Weiteren verwendete Schreibweise (Meth)acrylate steht für Alkylester der Acrylsäure und/oder der Methacrylsäure.

In einer besonderen Ausführungsform sind beide Komponenten A und B jeweils um ein Polymer. Für den Fall, dass es sich bei den Komponenten A und B jeweils um ein Polymer handelt, kann es sich bei diesen Polymeren um verschiedene oder um gleiche, sich nur bezüglich der funktionellen Gruppen unterscheidende, Polymere handeln.

Erfindungsgemäß werden als Diene Verbindungen verwendet, die mindestens zwei Dien-Funktionalitäten aufweisen, wobei es sich bei den Dien-Funktionalitäten um Bishydrazone oder um Bis-Schiff' sche Basen handelt.

Bevorzugt gibt es dabei zwei Ausführungsformen. In der ersten Ausführungsform ist die Dien-Funktionalität ein Bishydrazon. Bishydrazone weisen folgende Struktur auf:

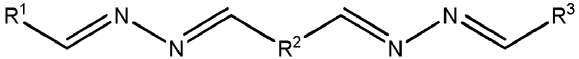

Dabei handelt es sich bei R¹ und R³ um identische oder unterschiedliche Gruppen. Bei diesen Gruppen kann es sich um Wasserstoff, eine Hydroxy-, Amin-, Mercapto-, Silylgruppe oder einen Kohlenwasserstoffrest handeln. Der Kohlenwasserstoffrest kann linear, teilweise cyclisch oder verzweigt sein. Darüber hinaus kann der Kohlenwasserstoffrest ungesättigte oder aromatische Gruppen enthalten, bzw. gänzlich aus aromatischen Gruppen bestehen. Darüber hinaus kann der Kohlenwasserstoffrest weitere funktionelle Gruppen aufweisen.

Bei R² handelt es sich um eine zweibindige, lineare, verzweigte, cyclische oder teilweise cyclische Kohlenwasserstoffgruppe, die weitere ungesättigte oder aromatische Gruppen sowie funktionelle Substituenten enthalten oder aufweisen kann.

Solche Verbindungen können aus Diketonen, Dialdehyden oder Glyoxal und Hydrazin synthetisiert werden. Bei dem Produkt aus Glyoxal und Hydrazin entstehen sowohl Hydrazongruppen als auch Schiff' sche Basen, die miteinander in Konkurrenz treten können, wobei beide Gruppen erfindungsgemäß sind:

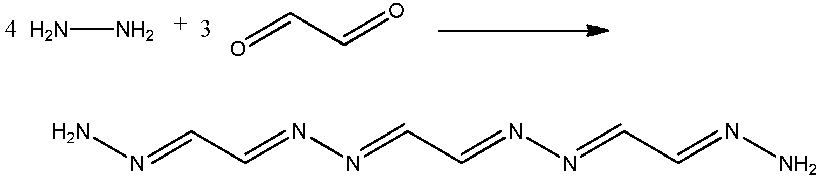

Anschaulicher ist die Synthese beispielsweise aus Glutaraldehyd und Hydrazin:

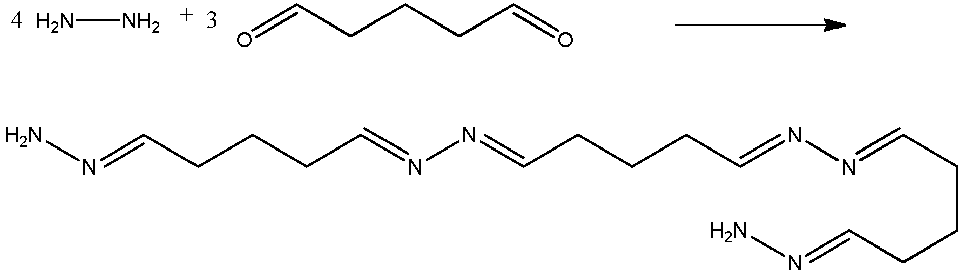

Details zu der Synthese der Bishydrazone findet der Fachmann in Goldin et al. (Vyssokomolekulyarny Soedniniya Ser.B, 1975, 17(6), S.463-5).

In einer Ausführungsform, in der es sich bei dem Dien um eine oligomere oder polymere Verbindung handelt, ist in einer möglichen Ausführungsform eine der Gruppen R¹, R² oder R³ an ein Oligomer oder Polymer gebunden. In einer dazu alternativen Ausführungsform sind die Diengruppen räumlich voneinder getrennt an das Polymer bzw. Oligomer gebunden. Eine solche Ausführungsform kann beispielsweise wie folgt aussehen:

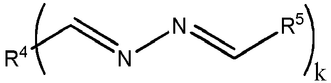

Dabei handelt es sich bei der Gruppe R⁴ um das Polymer bzw. Oligomer. Für R⁵ sind die gleichen Gruppen, die bereits für R¹ bzw. R³ aufgeführt wurden, möglich. Sollte es sich dabei um Oligomere oder Polymere handeln, sind diese bevorzugt nur einbindig. Bei k handelt es sich um eine Zahl größer oder gleich 2, bevorzugt größer oder gleich zwei und kleiner 10.

Bei der zweiten alternativen Ausführungsform handelt es sich bei den Dien-Funktionalitäten um Bis-Schiff' sche Basen. Bis-Schiff' sche Basen weisen folgende Funktionalität auf:

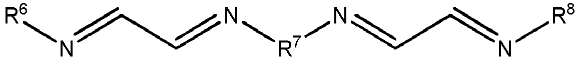

Dabei handelt es sich bei R⁶ und R⁸ um identische oder unterschiedliche Gruppen. Bei diesen Gruppen kann es sich um Wasserstoff, eine Hydroxy-, Amin-, Mercapto-, Silylgruppe oder einen Kohlenwasserstoffrest handeln. Der Kohlenwasserstoffrest kann linear, teilweise cyclisch oder verzweigt sein. Darüber hinaus kann der Kohlenwasserstoffrest ungesättigte oder aromatische Gruppen enthalten, bzw. gänzlich aus aromatischen Gruppen bestehen. Darüber hinaus kann der Kohlenwasserstoffrest weitere funktionelle Gruppen aufweisen.

Bei R⁷ handelt es sich um eine zweibindige, lineare, verzweigte, cyclische oder teilweise cyclische Kohlenwasserstoffgruppe, die weitere ungesättigte oder aromatische Gruppen sowie funktionelle Substituenten enthalten oder aufweisen kann.

Solche Verbindungen werden aus Glyoxal oder vicinalen Diketonen und Di-, Tri- oder höherwertigen Aminen synthetisiert. Ein Beispiel für eine solche Synthese ist die Umsetzung von Glyoxal mit Isophorondiamin (IPD):

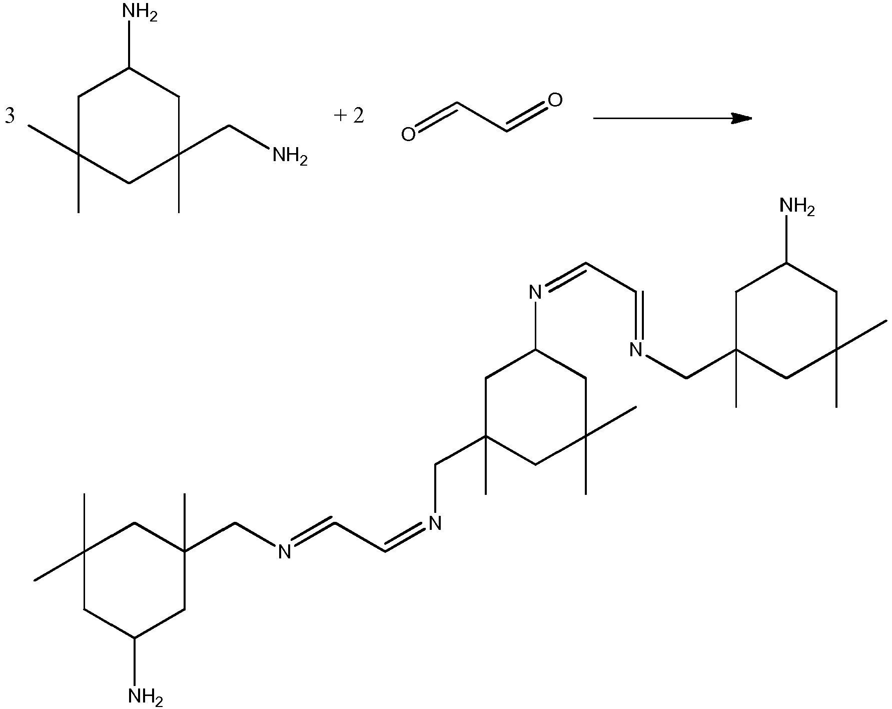

In einer Ausführungsform, in der es sich bei diesem Dien um eine oligomere oder polymere Verbindung handelt, ist in einer möglichen Ausführungsform eine der Gruppen R⁶, R⁷ oder R⁸ an ein Oligomer oder Polymer gebunden. In einer dazu alternativen Ausführungsform sind die Diengruppen räumlich voneinder getrennt an das Polymer bzw. Oligomer gebunden. Eine solche Ausführungsform kann beispielsweise wie folgt aussehen:

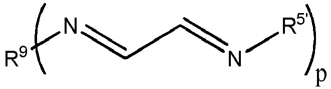

Dabei handelt es sich bei der Gruppe R⁹ um das Polymer bzw. Oligomer. Für R^{5'} sind die gleichen Gruppen, die bereits für R¹ bzw. R³ aufgeführt wurden, möglich. Sollte es sich dabei um Oligomere oder Polymere handeln, sind diese bevorzugt nur einbindig. Bei p handelt es sich um eine Zahl größer oder gleich 2, bevorzugt größer oder gleich zwei und kleiner 10.

Bei den verwendeten bi- bzw. multifunktionellen Dienophilen kann es sich um verschiedenartige Substanzen handeln. Wie bereits ausgeführt können diese niedermolekulare Verbindungen, Oligomere oder Polymere sein. In letzteren beiden Fällen können die dienophilen Gruppen an Kettenenden oder als Substituenten an der Oligomer- bzw. Polymerkette gebunden sein. Im Falle von vernetzenden Systemen mit dienophil substituierten Oligomeren bzw. Polymeren, die eine Funktionalität größer 2 aufweisen, können verschiedene Ketten auch unterschiedliche Funktionalisierungsgrade aufweisen. In einem solchen Fall wird ein durchschnittlicher Funktionalisierungsgrad angegeben. Die dienophil substituierten Oligomere oder Polymere können mittels verschiedener Methoden realisiert worden sein: Bei der Monomermethode werden funktionelle Monomere - eine einen dienophilen Substituenten aufweisend - copolymerisiert.
Bei der Endcappingmethode wird eine Polymerisation mittels einer geeigneten substituierten Verbindung abgebrochen. Auf diese Weise wird ein Kettenende Substituiert. Das zweite substituierte Kettenende kann beispielsweise durch Verwendung eines substituierten oder eines bifunktionellen Initiators realisiert werden.
Bei der Methode einer polymeranalogen Umsetzung werden funktionelle Gruppen entweder an den Kettenenden oder an der Kette mit einer Verbindung, eine Gruppe reaktiv mit der Funktionalität am Polymer und eine zweite, dienophile Gruppe aufweisend, umgesetzt.

Dienophile Gruppen für eine Aza-Diels-Alder-Reaktion sind allgemein aus der Literatur bekannt. Ein Beispiel für Dienophile mit einer Kohlenstoff-Kohlenstoff-Doppelbindung sind Maleimidene. Ein Beispiel für ein niedermolekulares bifunktionelles Dienophil ist p-Benzol-bismaleimide, das unter dem Produktnamen COMPIMIDE^{©} von der Firma EVONIK Technochemie GmbH kommerziell verfügbar ist.

Es können auch aus der Chemie der Hetero-Diels-Alder-Reaktion bekannte Dienophile wie konjugiert elektronenziehend substituierte Aldehyde, Ketone oder Imine verwendet werden.

In einer besonderen Ausführungsform handelt es sich bei dem Dienophil um eine Verbindung mit einer Kohlenstoff-Schwefel-Doppelbindung. Neben den allgemein bekannten Thioketonen kann es sich dabei alternativ auch um einen Dithioester handeln. In einem solchen Fall bevorzugt ist das Dienophil eine Verbindung mit der Struktur 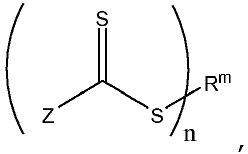 wobei es sich bei Z um eine stark Elektronen-ziehende Gruppe, bei R^{m} um eine mehrbindige organische Gruppe, bevorzugt basierend auf verzweigten oder linearen alkylischen, aromatischen oder einer Kombination aus alkylischen und aromatischen multifunktionalen Alkoholen, multifunktionalen halogenierten Verbindungen, multifunktionalen Carbonsäuren oder multifunktionalen Amine handelt. Alternativ kann es sich bei R^{m} auch um ein Polymer handeln. Die Anzahl der Dithioestergruppen n ist eine Zahl zwischen 2 und 20, bevorzugt zwischen 2 und 10 und besonders bevorzugt zwischen 2 und 4.
In einer bevorzugten Ausführungsform ist die Gruppe Z eine 2-Pyridylgruppe., eine Phosphorylgruppe oder eine Sulfphonylgruppe. Desweiteren kommen in Frage Cyano- oder Trifluoromethylgruppen sowie jede andere Gruppe Z, welche die Elektronendichte der C=S Doppelbindung sehr stark verringert und somit eine rasche Diels-Alder Reaktion erlaubt. Details zu dieser Ausführungsform können aus den deutschen Patentanmeldungen DE 102010001987.9 und DE 102010001992.5 abgeleitet werden.

Überraschend wurde gefunden, dass diese Systeme bereits bei Raumtemperatur, unter optionaler Zugabe eines Vernetzungskatalysators, sehr schnell vernetzen. Genauso überraschend wurde gefunden, dass diese Netzwerke bereits bei sehr geringen Temperaturen von z.B. etwas über 80 °C wieder einfach und nahezu vollständig in einen Thermoplasten zurückgeführt werden können. Darüber hinaus wurde sehr überraschend gefunden, dass daraufhin eine erneute Vernetzung, ohne weitere Zugabe von Vernetzer und/oder Katalysator, z.B. durch reines Abkühlen wieder erfolgen kann. Darüber hinaus ist es ein besonders überraschender Effekt, dass diese Zyklen aus Vernetzen und Rücküberführung in einen Thermoplasten mindestens dreimal, bevorzugt mindestens fünfmal ohne einen größeren Eigenschaftsverlust des Netzwerks durchgeführt werden können.

Ein weiterer Aspekt der vorliegenden Erfindung ist das Verfahren zur reversiblen Kupplung bzw. Vernetzung. Bei der Durchführung dieses Verfahrens wird eine Formulierung aus zumindest zwei unterschiedlichen Komponenten A und B, mittels einer Aza-Diels-Alder-Reaktion bei Raumtemperatur vernetzt, wobei das an der Aza-Diels-Alder beteiligte Dien zwei Dien-Funktionalitäten aufweist, wobei es sich bei den Dien-Funktionalitäten um Bishydrazone oder um Bis-Schiff'sche Basen handelt.

In einem zweiten Verfahrensschritt werden bei einer höheren Temperatur mindestens 50%, bevorzugt mindestens 90% und besonders bevorzugt mindestens 99% der Vernetzungsstellen mittels einer Retro-Aza-Diels-Alder-Reaktion wieder gelöst. Bei Durchführung dieses zweiten Verfahrensschritts werden im Falle eines nach dem ersten Verfahrensschritt vernetzten Systems bei einer Temperatur oberhalb von 80 °C bevorzugt innerhalb von 5 min, höchstens innerhalb von 10 min, mindestens 90 Gew%, bevorzugt mindestens 95 Gew% und besonders bevorzugt mindestens 98 Gew% der Formulierung in einem für die Formulierung vor der Vernetzung geeigneten Lösungsmittel wieder löslich. Die Vernetzung zuvor war derart ausgeprägt, dass bei einem 5minütigem Auswaschen mit dem gleichen Lösungsmittel höchstens 5 Gew%, bevorzugt höchstens 2 Gew% und besonders bevorzugt höchstens 1 Gew% der Formulierung gelöst werden konnten.

Der Ausdruck Formulierung und sämtliche damit verbundenen prozentualen Angaben beziehen sich in diesem Fall nur auf die Komponenten A und B. Weitere Formulierungsbestandteile, wie sie zum Beispiel in einer Beschichtungs- oder Klebstoffzusammensetzung zugegeben werden können, sind in dieser Betrachtung nicht berücksichtigt. Im Weiteren beschreibt der Ausdruck Formulierung im Rahmen dieser Schrift ausschließlich die Komponenten A und B sowie einen optionalen Vernetzungskatalysator. Der Ausdruck Zusammensetzung dagegen umfasst neben der Formulierung zusätzlich zugegebene Komponenten. Bei diesen zusätzlichen Komponenten kann es sich um spezifisch für die jeweilige Anwendung ausgesuchte Zuschlagsstoffe wie beispielsweise Füllstoffe, Pigmente, Additive, Verträglichkeitsvermittler, Cobindemittel, Weichmacher, Schlagzähmodifier, Verdicker, Entschäumer, Dispergieradditive, Rheologieverbesserer, Haftvermittler, Kratzfestadditive, Katalysatoren oder Stabilisatoren handeln.

Entsprechend der bereits beschriebenen Formulierung werden in dem Verfahren zuerst die Komponenten A und B, sowie optionale weitere Zuschlagsstoffe zusammen gebracht. Bei den Komponenten A und/oder B handelt es sich um zumindest ein Polymere gemäß der weiter oben aufgeführten Auflistung.

Die Kupplungs- bzw. Vernetzungsreaktion kann bei Raumtemperatur innerhalb von 10 min, bevorzugt innerhalb von 5 min, besonders bevorzugt innerhalb von 2 min und ganz besonders bevorzugt innerhalb von einer Minute erfolgen. Zur Beschleunigung der Kupplung bzw. Vernetzung kann nach dem Vermischen der Komponenten A und B ein Katalysator, im Weiteren Vernetzungskatalysator genannt, ohne damit die Erfindung auf vernetzende Systeme zu beschränken, zugegeben werden. Bei diesen Vernetzungskatalysatoren handelt es sich in der Regel um starke Säuren wie Trifluoressigsäure oder Schwefelsäure oder um starke Lewis-Säuren wie z.B. Bortrifluorid, Zinkdichlorid, Titandichlorid-diisopropylat oder Aluminiumtrichlorid. Bei Verwendung eines solchen Vernetzungskatalysators erfolgt die Vernetzung nach dem Vermischen der Komponenten A und B mit dem Vernetzungskatalysator innerhalb von 8 min, bevorzugt innerhalb von 5 min, besonders bevorzugt innerhalb von 2 min.

In einer alternativen Ausführungsform kann die Kupplung bzw. Vernetzung auch ohne einen Katalysator, z.B. thermisch, beschleunigt werden. Dabei liegt die Aktivierungstemperatur unterhalb der Temperatur, die für die Retro-(Aza)-Diels-Alder-Reaktion benötigt wird.

In einer weiteren alternativen Ausführungsform enthält die Formulierung unabhängig von der Aktivierung der Vernetzungsreaktion einen weiteren Katalysator, der die Aktivierungstemperatur der Retro-Aza-Diels-Alder-Reaktion absenkt. Bei diesen Katalysatoren kann es sich beispielsweise um Eisen oder eine Eisenverbindung handeln.

Die erfindungsgemäßen Formulierungen bzw. Verfahren können in verschiedensten Anwendungsgebieten zur Verwendung kommen. Die nachfolgende Liste zeigt einige bevorzugte Anwendungsgebiete beispielhaft auf, ohne die Erfindung diesbezüglich in irgendeiner Form einzuschränken. Solche bevorzugten Anwendungsgebiete sind Klebstoffe, Dichtstoffe, Formmassen, Lacke, Farbe, Beschichtungen, Verbundmaterialien oder Tinten.

Bei diesen Tinten handelt es sich beispielsweise um Zusammensetzungen, die thermisch appliziert werden und auf dem Substrat vernetzen. Wenn man leitfähige Oligomere verwendet oder Additive zur Erzeugung einer Leitfähigkeit im Allgemeinen, wird eine elektrisch leitende Tinte erhalten, die z.B. per Bubble-jet - Verfahren verarbeitet werden kann.
Beispiele aus den Anwendungsgebieten Lacke, Beschichtungen und Farbe sind Zusammensetzungen, die z.B. poröse Materialien im entnetzten Zustand besonders gut tränken oder benetzen können und in Folge der Vernetzungsreaktion hochkohärente Materialien ergeben.
Ähnliche Charakteristika sind von Bedeutung für Klebstoffe, die hohe Kohäsion aufweisen sollten und dennoch leicht die Oberflächen der zu klebenden Materialien benetzen sollen. Eine weitere Anwendung im Bereich Kleben ist zum Beispiel eine nur temporär benötigte, später wieder zu lösende Fügung, wie sie in verschiedenen Produktionsprozessen zum Beispiel im Automobilbau oder im Maschinenbau vorkommen kann.
Eine andere denkbare Anwendung ist das Verkleben von Bauteilen, die über die Lebensdauer des gesamten Produktes gesehen eine hohe Austauschwahrscheinlichkeit haben, und daher möglichst einfach und rückstandsfrei wieder zu entfernen sein sollten. Ein Beispiel für eine solche Anwendung ist das Verkleben von Automobilfrontscheiben.

Ein besonderes Beispiel für Kleb- oder Dichtstoffe ist die Verwendung in Lebensmittelverpackungen, die sich beim Aufheizen, beispielsweise in einer Mikrowelle selbsttätig lösen lassen bzw. öffnen.

Beispiele für Anwendungen im Bereich Rapid-Prototyping für die hier beschriebenen vernetzenden und entnetzenden Materialien sind im Bereich FDM (Fused Deposition Modeling) oder beim 3D-Druck per Ink-jet-Verfahren mit niedrigviskosen Schmelzen zu finden. Aber auch die Anwendung in anderen Rapid-Prototyping-Verfahren ist möglich.

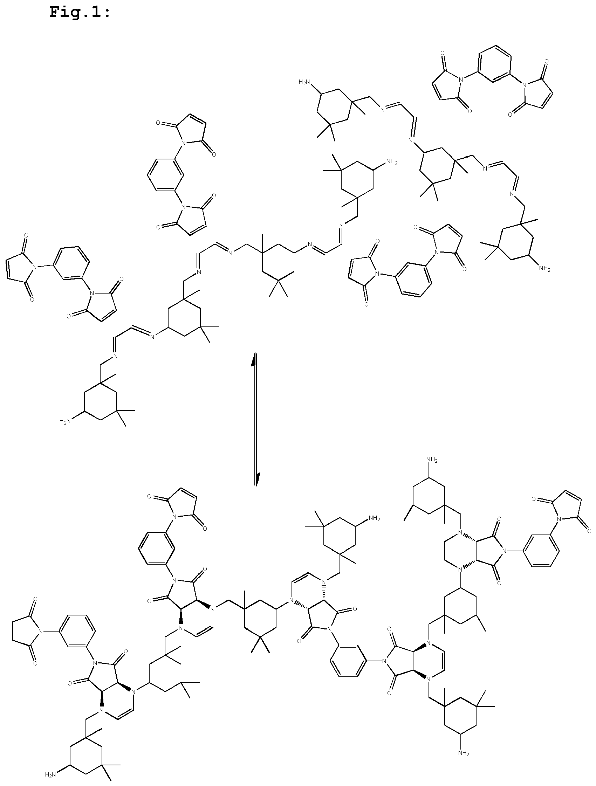

In Fig.1 ist beispielhaft zur Verdeutlichung die Vernetzungsreaktion zwischen insgesamt 5 p-Benzolbismaleimiden, einer tri- und einer bifunktionellen Schiff' schen Base dargestellt.

## Patentansprüche

1. Reversibel kuppel- oder vernetzbare Formulierung,
**dadurch gekennzeichnet, dass** die Formulierung mittels einer Aza-Diels-Alder-Reaktion umsetzbar ist,
dass die Formulierung eine Komponente A enthält, die mindestens zwei dienophile Doppelbindungen aufweist, dass die Formulierung eine Komponente B enthält, die mindestens zwei Dien-Funktionalitäten aufweist, wobei es sich bei den Dien-Funktionalitäten um Bishydrazone oder um Bis-Schiff' sche Basen handelt.

2. Formulierung gemäß mindestens einem der Ansprüche 1,
**dadurch gekennzeichnet, dass** zumindest eine dieser beiden Komponenten A oder B mehr als zwei Funktionalitäten aufweist.

3. Formulierung gemäß mindestens einem der Ansprüche 1 oder 2, **dadurch gekennzeichnet, dass** mindestens eine der Komponenten A oder B als Polymer vorliegt.

4. Formulierung gemäß mindestens einem der Ansprüche 1 bis 3, **dadurch gekennzeichnet, dass** es sich bei den Komponenten A und B jeweils um ein Polymer handelt, und dass es sich bei diesen Polymeren um gleiche oder verschiedene Polymere handeln kann.

5. Formulierung gemäß Anspruch 3, **dadurch gekennzeichnet, dass** es sich bei den Polymeren um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handelt.

6. Formulierung gemäß Anspruch 5, **dadurch gekennzeichnet, dass** es sich bei dem Polymer um ein Poly(meth)acrylat oder ein Polystyrol handelt, und dass dieses mittels ATRP, NMP oder RAFT hergestellt wurde.

7. Verfahren zur reversiblen Vernetzung, **dadurch gekennzeichnet, dass** eine Formulierung aus zumindest zwei unterschiedlichen Komponenten A und B, mittels einer Aza-Diels-Alder-Reaktion bei Raumtemperatur vernetzt wird und bei einer höheren Temperatur mindestens 50% der Vernetzungsstellen mittels einer Retro-Aza-Diels-Alder-Reaktion wieder gelöst werden,
und dass das an der Aza-Diels-Alder-Reaktion beteiligte Dien zwei Dien-Funktionalitäten aufweist, wobei es sich bei den Dien-Funktionalitäten um Bishydrazone oder um Bis-Schiff' sche Basen handelt.

8. Verfahren gemäß Anspruch 7, **dadurch gekennzeichnet, dass** bei einer Temperatur oberhalb von 80 °C bevorzugt innerhalb von 5 min mindestens 90 % der Formulierung in einem für die Formulierung vor der Vernetzung geeigneten Lösungsmittel wieder löslich sind.

9. Verfahren gemäß zumindest einem der Ansprüche 7 oder 8, **dadurch gekennzeichnet, dass** es sich bei den Komponenten A und/oder B um Polymere gemäß Anspruch 5 handelt.

10. Verfahren gemäß zumindest einem der Ansprüche 7 bis 9, **dadurch gekennzeichnet, dass** die Vernetzung nach dem Vermischen der Komponenten A und B innerhalb von 2 min erfolgt.

11. Verfahren gemäß zumindest einem der Ansprüche 7 bis 9, **dadurch gekennzeichnet, dass** die Vernetzung nach dem Vermischen der Komponenten A und B mit einem Vernetzungskatalysator innerhalb von 2 min erfolgt.

12. Verwendung einer Formulierung gemäß zumindest einem der Ansprüche 1 bis 6 in Klebstoffen, Dichtstoffen, Formmassen, Lacken, Farben, Beschichtungen, Tinten oder Verbundmaterialien.

13. Verwendung einer Formulierung gemäß zumindest einem der Ansprüche 1 bis 6 in einem Fused Deposition Modeling-, 3D-Ink-jet-Druck oder einem anderen Rapid-Prototyping-Verfahren.

## Claims

1. Reversibly couplable or crosslinkable formulation,
**characterized in that** the formulation is crosslinkable by means of an aza-Diels-Alder reaction,
**in that** the formulation comprises a component A which has at least two dienophilic double bonds,
**in that** the formulation comprises a component B which has at least two diene functionalities, wherein the diene functionalities are bishydrazones or bis-Schiff bases.

2. Formulation according to at least one of Claims 1, **characterized in that** at least one of these two components, A or B, has more than two functionalities.

3. Formulation according to at least one of Claims 1 or 2, **characterized in that** at least one of the components, A or B, is present in the form of a polymer.

4. Formulation according to at least one of Claims 1 to 3, **characterized in that** components A and B are each a polymer, and **in that** these polymers may be identical or different polymers.

5. Formulation according to Claim 3, **characterized in that** the polymers are polyacrylates, polymethacrylates, polystyrenes, copolymers of acrylates, methacrylates and/or styrenes, polyacrylonitrile, polyethers, polyesters, polylactic acids, polyamides, polyesteramides, polyurethanes, polycarbonates, amorphous or partially crystalline poly-α-olefins, EPDM, EPM, hydrogenated or unhydrogenated polybutadienes, ABS, SBR, polysiloxanes and/or block, comb and/or star copolymers of these polymers.

6. Formulation according to Claim 5, **characterized in that** the polymer is a poly(meth)acrylate or a polystyrene, and **in that** said polymer has been prepared by means of ATRP, NMP or RAFT.

7. Process for reversible crosslinking, **characterized in that** a formulation comprising at least two different components A and B is crosslinked by means of an aza-Diels-Alder reaction at room temperature and at a higher temperature at least 50% of the crosslinks are undone by means of a retro-aza-Diels-Alder reaction, and **in that** the diene partaking in the aza-Diels-Alder reaction has two diene functionalities, wherein the diene functionalities are bishydrazones or bis-Schiff bases.

8. Process according to Claim 7, **characterized in that**, at a temperature above 80°C, preferably within 5 minutes, at least 90% of the formulation is soluble again in a solvent suitable for the formulation prior to crosslinking.

9. Process according to at least one of Claims 7 or 8, **characterized in that** components A and/or B are polymers according to claim 5.

10. Process according to at least one of Claims 7 to 9, **characterized in that** the crosslinking takes place within 2 minutes after the mixing of components A and B.

11. Process according to at least one of Claims 7 to 9, **characterized in that** the crosslinking takes place within 2 minutes after the mixing of components A and B with a crosslinking catalyst.

12. Use of a formulation according to at least one of Claims 1 to 6 in adhesives, sealants, molding compounds, varnishes, paints, coatings, inks, or composite materials.

13. Use of a formulation according to at least one of Claims 1 to 6 in a fused deposition modeling, 3D ink-jet printing or other rapid prototyping technique.

## Revendications

1. Formulation pouvant être couplée ou réticulée de manière réversible, **caractérisée en ce que** la formulation peut être transformée au moyen d'une réaction aza-Diels-Alder, **en ce que** la formulation contient un composant A qui présente au moins deux doubles liaisons diénophiles, **en ce que** la formulation contient un composant B, qui présente au moins deux fonctionnalités diène, les fonctionnalités diène étant des bishydrazones ou des bases doubles de Schiff.

2. Formulation selon au moins l'une quelconque des revendications 1, **caractérisée en ce qu'**au moins un de ces deux composants A ou B présente plus de deux fonctionnalités.

3. Formulation selon au moins l'une quelconque des revendications 1 ou 2, **caractérisée en ce qu'**au moins un des composants A ou B se trouve sous forme de polymère.

4. Formulation selon l'une quelconque des revendications 1 à 3, **caractérisée en ce qu'**il s'agit, pour les composants A et B, à chaque fois d'un polymère et **en ce qu'**il peut s'agir de polymères identiques ou différents pour ces polymères.

5. Formulation selon la revendication 3, **caractérisée en ce qu'**il s'agit, pour les polymères, de polyacrylates, de polyméthacrylates, de polystyrènes, de copolymères d'acrylates, de méthacrylates et/ou de styrènes, de polyacrylonitrile, de polyéthers, de polyesters, de poly(acides lactiques), de polyamides, de polyesteramides, de polyuréthanes, de polycarbonates, de poly-α-oléfines amorphes ou partiellement cristallines, d'EPDM, d'EPM, de polybutadiènes hydrogénés ou non hydrogénés, d'ABS, de SBR, de polysiloxanes et/ou de copolymères séquencés, en peigne et/ou en étoile de ces polymères.

6. Formulation selon la revendication 5, **caractérisée en ce qu'**il s'agit, pour le polymère, d'un poly(méth)acrylate ou d'un polystyrène et **en ce que** celui-ci a été préparé par ATRP (Atom Transfer Radical Polymerization - polymérisation radicalaire par transfert d'atomes), NMP (Nitroxide-Mediated Radical Polymerization - polymérisation radicalaire médiée par nitroxyde) ou RAFT (Reversible Addition-Fragmentation Chain Transfer - polymérisation radicalaire contrôlée par transfert de chaîne réversible par addition-fragmentation).

7. Procédé pour la réticulation réversible, **caractérisé en ce qu'**une formulation constituée par au moins deux composants différents A et B est réticulée à température ambiante au moyen d'une réaction aza-Diels-Alder et au moins 50% des sites de réticulation sont de nouveau défaits à une température supérieure au moyen d'une réaction rétro-aza-Diels-Alder et **en ce que** le diène participant à la réaction aza-Diels-Alder présente deux fonctionnalités diène, où il s'agit, pour les fonctionnalités diène, de bishydrazones ou de bases doubles de Schiff.

8. Procédé selon la revendication 7, **caractérisé en ce qu'**à une température supérieure à 80°C, de préférence en 5 minutes, au moins 90% de la formulation sont de nouveau solubles dans un solvant approprié pour la formulation avant la réticulation.

9. Procédé selon au moins l'une quelconque des revendications 7 ou 8, **caractérisé en ce qu'**il s'agit, pour les composants A et/ou B, de polymères selon la revendication 5.

10. Procédé selon au moins l'une quelconque des revendications 7 à 9, **caractérisé en ce que** la réticulation a lieu dans les 2 min après le mélange des composants A et B.

11. Procédé selon au moins l'une quelconque des revendications 7 à 9, **caractérisé en ce que** la réticulation a lieu dans les 2 min après le mélange des composants A et B avec un catalyseur de réticulation.

12. Utilisation d'une formulation selon au moins l'une quelconque des revendications 1 à 6 dans des adhésifs, des substances d'étanchéité, des masses de moulage, des laques, des peintures, des revêtements, des encres ou des matériaux composites.

13. Utilisation d'une formulation selon au moins l'une quelconque des revendications 1 à 6 dans une impression par FDM (Fused Deposition Modeling - moulage par dépôt en fusion), une impression par jet d'encre 3D ou un autre procédé de prototypage rapide.
